# FASCICULE DE BREVET EUROPEEN

(11) **EP 2 998 877 B1**
(45) Date de publication et mention de la délivrance du brevet: **04.12.2024**
(21) Numéro de dépôt: 15178193.7
(22) Date de dépôt: 24.07.2015
(51) Int. Cl.: G06F 15/16, G06F 1/26, G06F 11/20, G06F 1/12

(54) **SERVEUR COMPRENANT UNE PLURALITÉ DE MODULES**
SERVER, DER EINE VIELZAHL VON MODULEN UMFASST
SERVER COMPRISING A PLURALITY OF MODULES

(30) Priorité: 26.08.2014 FR 1401900
(43) Date de publication de la demande: 23.03.2016
(73) Titulaire: BULL SAS, 78340 Les Clayes-sous-Bois (FR); Commissariat à l'Energie Atomique et aux Energies Alternatives, 75015 Paris (FR)
(72) Inventeur: BRASSAC, Claude, 78100 SAINT GERMAIN EN LAYE (FR); LECOURTIER, Georges, 78000 VERSAILLES (FR)
(74) Mandataire: Novagraaf Technologies

(56) Documents cités:
- US-A1- 2004 049 706
- US-A1- 2006 026 325
- US-A1- 2008 168 182
- US-A1- 2008 313 312
- US-A1- 2009 276 513
- US-A1- 2014 124 168
- US-B1- 6 891 397
- US-B1- 8 595 550

## Description

La présente invention a trait au domaine des systèmes de traitement de l'information et/ou de la communication. Plus particulièrement, l'invention propose la réalisation d'un serveur multi-modules et l'implémentation des fonctions qui lui sont associées.

Parmi les architectures de serveurs informatiques, les serveurs réseaux multiprocesseurs dits SMP, acronyme anglais de « *Symétrie Multi Processor* », sont typiquement réalisés par une pluralité de circuits intégrés, communément appelés sockets. Pour ces serveurs, les sockets constituent les processeurs du système, ces circuits intégrés étant reliés par un bus d'interconnexion à très haut débit et à très faible latence, permettant la réalisation d'une mémoire partagée. On entendra par la suite par « interconnexion », une liaison physique et logique connectant deux interfaces de connexion.

Généralement, pour des raisons de performances électriques, chaque socket supporte directement une partie des composants mémoire du serveur SMP. L'ensemble de cette mémoire est alors rendue cohérente au moyen de contrôleurs de mémoires, permettant de garantir automatiquement que toute donnée modifiée par l'un des processeurs est alors visible par tous les autres.

Pour des raisons physiques, un serveur SMP présentant un nombre élevé de sockets doit alors être divisé en plusieurs sous-systèmes. Ces sous-systèmes peuvent, à titre d'exemple, être réalisés par des cartes filles connectées à une carte mère, des lames connectées à un fond de panier distribuant les alimentations et les signaux des bus, ou encore des modules autoalimentés en tension et courant par le secteur. On parle alors de serveur SMP multi-modulaire.

Quelle que soit l'architecture d'un serveur SMP, celui-ci nécessite des outils d'administration matérielle basés sur des normes et/ou standards.

Ainsi, l'interface de gestion intelligente de matériel, dite IPMI (acronyme anglais de « *Intelligent Platform Management Interface* ») propose un ensemble de spécifications d'interfaces visant à gérer, c'est-à-dire superviser et contrôler, l'état physique de certains composants ou matériels électroniques présents dans des équipements informatiques. La norme IPMI permet, à titre d'exemple, de surveiller dans un serveur la régulation en température, en tension, en alimentation électrique des microprocesseurs, leur bonne mise sous tension, le taux d'humidité des composants, ou encore la vitesse des ventilateurs de refroidissement. L'ensemble des fonctions de l'IPMI sont en général activables via un système basique d'entrée/sortie dit BIOS (acronyme anglais de «*Basic Input*/*Output System* ») ou via un logiciel de gestion fourni par le constructeur de l'équipement. Ainsi, en cas de nécessité, par exemple lors de la remontée d'une alerte associée à un événement (ex : surchauffe) d'un équipement, l'administrateur d'un réseau est capable via une interface graphique appropriée et depuis un même lieu (ex : sur une machine locale ou à distance), d'éteindre électriquement l'équipement concerné, le redémarrer, réinitialiser ses paramètres si nécessaire, ou encore allumer un équipement alternatif.

Pour des équipements matériels (dits « *hardware* » en anglais), la supervision de l'état physique des composants ou matériels électroniques est couramment assurée par un contrôleur de gestion de la carte de base dit BMC (acronyme anglais de « *Baseboard Management Controler* »), implémenté sur la carte mère, ou sur la carte principale du matériel à superviser. A titre d'exemple, pour un serveur, les fonctions du BMC sont réalisées par l'intégration sur la carte mère du serveur d'un système sur une puce SOC (acronyme anglais de « *System On Chip* »), sur lequel est exécuté un micrologiciel (dit « *firmware* » en anglais) implémentant la norme IPMI.

Cependant, les diverses implémentations existantes ne répondent qu'à la problématique courante d'un serveur mono carte-mère. Dans le cas d'un serveur comprenant une pluralité de modules connectés via des bus logistiques de données à un composant d'interconnexion, par exemple connectés selon le standard I²C (acronyme anglais de « *Inter-Integrated Circuit* »), l'utilisation d'un contrôleur BMC s'avère rapidement limitée. Le nombre de capteurs augmente en effet proportionnellement avec le nombre de modules interconnectés, tandis que la norme IPMI se limite à un nombre prédéfini de capteurs autorisés. Par ailleurs, l'accroissement du nombre de modules nécessite l'extension des bus logistiques de données. Une telle extension, dans le cas par exemple de l'I²C, est peu fiable, manque de performance et de souplesse.

Afin de contourner les problèmes dus au support de l'IPMI, une solution consiste alors à se tourner vers des standards d'administration propriétaires. Une telle solution s'avère néanmoins peu intéressante, si l'on souhaite continuer à garantir à la fois une interopérabilité et des possibilités d'intégration des serveurs avec des systèmes de gestion de données existants, ces systèmes utilisant des interfaces de gestion standard.

Il convient donc de continuer à assurer le support de la norme IPMI, et plus généralement d'interfaces de gestion standard, pour des équipements informatiques multi-modules, en vue de garantir la compatibilité inter-équipements.

Le document US2008/313312 de FLYNN DAVID publié le 18 décembre 2008 et le document US2009/276513 de HOLDAWAY KEVAN publié le 5 novembre 2009 divulguent tous les deux la gestion de noeuds par le biais de BMC inclus dans chaque noeud mais ne divulguent pas la formation de partitions ni l'utilisation d'un signal d'horloge maître.

La présente invention a pour objet de remédier aux inconvénients précités.

Un premier objectif est de proposer une architecture de serveur multi-module.

Un deuxième objectif est de proposer un serveur multi-module avec un nombre de modules extensibles et permettant la compatibilité logicielle avec des interfaces de gestion standard.

Un troisième objectif est de proposer un micrologiciel compatible avec des interfaces de gestion standard, telle la norme IPMI, et permettant la gestion de tout module constitutif d'un serveur multi-module.

A cet effet, il est proposé un serveur comprenant une pluralité de modules, chaque module comprenant
- un élément de communication apte à assurer la cohérence d'une mémoire partagée entre les modules ;
- une pluralité de processeurs CPU connectés entre eux et connectés à l'élément de communication ;
- un système sur une puce SOC connecté à la pluralité de processeurs CPU et à l'élément de communication, le système sur une puce SOC exécutant un micrologiciel ;
- un réseau de portes programmables (FPGA) connecté au système sur une puce SOC, à l'élément de communication et à la pluralité de processeurs CPU ;
   les modules étant interconnectés par
- une interconnexion entre chaque élément de communication via un réseau XQPI ;
- une interconnexion entre chaque système sur une puce SOC via un réseau privé en protocole Ethernet, encapsulant un protocole de communication en accord avec la norme IPMB ;
le micrologiciel exécuté sur chaque système sur une puce SOC de chaque module réalisant deux composants logiciels, à savoir :
- un composant contrôleur satellite de gestion du système (SMC) apte à mesurer les paramètres physiques de son module et gérer les fonctions locales de ce module ;
- un composant contrôleur de gestion de la carte de base (BMC) apte à superviser l'ensemble des SMC de tous les modules, gérer de manière centrale l'ensemble des fonctions du serveur et échanger des données avec chacun des composants BMC via l'interconnexion entre chaque système sur une puce SOC.

Avantageusement, dans ce serveur, l'interconnexion des éléments de communication et l'interconnexion des SOC sont réalisées via l'intermédiaire d'un boitier d'interconnexion, le boitier d'interconnexion comprenant un réseau de portes programmables (FPGA).

Avantageusement, dans ce serveur, le boitier d'interconnexion est alimenté électriquement par les modules, chaque module comprenant au moins deux blocs d'alimentation PSU, les blocs d'alimentations PSU étant dimensionnés avec une redondance 2N.

Avantageusement, dans ce serveur, une des fonctions gérées par chaque composant BMC est une fonction permettant l'instanciation des modules, cette fonction étant réalisée de la manière suivante :
- l'envoi d'une requête d'identifiant ID par le FPGA de chaque module au boitier d'interconnexion par l'intermédiaire du système sur une puce SOC ;
- l'envoi par le FPGA du boitier d'interconnexion d'un identifiant ID unique au FPGA en réponse à la requête d'identifiant ;
- la détermination par le composant BMC de l'adresse de son module et des adresses des modules auquel il est interconnecté, la détermination de ces adresses étant réalisée en fonction de l'identifiant ID réceptionné par le FPGA.

Avantageusement, dans ce serveur, l'identifiant ID envoyé par le FPGA du boitier d'interconnexion est déterminé en fonction de chaque emplacement de connexion physique de chacun des modules au module d'interconnexion.

Avantageusement, dans ce serveur, chacun des modules comprend
- un générateur de signal d'horloge, apte à synchroniser les processeurs CPU de son module ;
- son FPGA programmé pour partitionner et grouper en sous-ensembles les modules en fonction de caractéristiques communes.

Avantageusement, dans ce serveur, chaque composant BMC est programmé pour :
- identifier dans un ensemble ou un sous-ensemble de modules son appartenance à un module maître ou esclave, en fonction d'informations d'indentification de chacun des modules de cet ensemble ou sous-ensemble ;
- si il appartient à un module maître, configurer son FPGA, de manière à ce que le FPGA distribue le signal d'horloge du module maître aux modules esclaves du même ensemble ou sous ensemble ;
- si il appartient à un module esclave, configurer son FPGA de manière à ce que le FPGA désactive le signal d'horloge du module esclave.

Avantageusement, dans ce serveur, chaque processeur CPU de chaque module comprend des compteurs d'horodatages TSC, aptes à synchroniser des tâches comportant une pluralité de processus légers, la synchronisation de l'ensemble des compteurs d'horodatages TSC de ces processeurs CPU dans un ensemble ou un sous-ensemble de module étant réalisée par :
- l'envoi par chaque composant BMC de chaque module esclave de cet ensemble ou sous-ensemble, d'une notification au BMC du module maître, lorsque le module esclave sort d'une phase d'initialisation ou de réinitialisation ;
- une notification au BMC du module maître, lorsque le maître module sort d'une phase d'initialisation ou de réinitialisation ;
- l'envoi par le BMC du module maître, lorsque tous les modules maître et esclaves sont sortis d'une phase d'initialisation ou de réinitialisation, d'un signal de synchronisation apte à réinitialiser l'ensemble des compteurs d'horodatage TSC des processeurs CPU pour tous les modules du même ensemble ou sous-ensemble.

Avantageusement, dans ce serveur, chaque FPGA de chaque module comprend des compteurs d'horodatages TSC, aptes lors de toute occurrence d'erreur dans son module à enregistrer des informations relatives à l'erreur comprenant au moins l'horodatage de l'erreur, la synchronisation de l'ensemble des compteurs d'horodatages TSC de chaque FPGA dans un ensemble ou un sous-ensemble de module étant réalisée par :
- l'envoi par chaque composant BMC de chaque module esclave de cet ensemble ou sous-ensemble, d'une notification au BMC du module maître, lorsque le module esclave sort d'une phase d'initialisation ou de réinitialisation ;
- une notification au BMC du module maître, lorsque le maître module sort d'une phase d'initialisation ou de réinitialisation ;
- l'envoi par le BMC du module maître, lorsque tous les modules maître et esclaves sont sortis d'une phase d'initialisation ou de réinitialisation, d'un signal de synchronisation apte à réinitialiser l'ensemble des compteurs d'horodatage TSC des FPGA pour tous les modules du même ensemble ou sous-ensemble.

Avantageusement, dans ce serveur, l'identification d'une erreur dans un ensemble ou un sous-ensemble modules est réalisée par une étape de comparaison entre les informations d'erreurs enregistrées par l'ensemble des compteurs d'horodatage TSC des FPGA de cet ensemble ou sous-ensemble, les BMC étant aptes à échanger et partager les informations d'erreurs dans le même ensemble ou sous-ensemble de modules.

D'autres objets et avantages de l'invention apparaîtront à la lumière de la description de modes de réalisation, faite ci-après en référence aux dessins annexés dans lesquels :
- la figure 1 est une représentation d'un serveur comprenant une pluralité de modules selon un mode de réalisation ;
- la figure 2 est une représentation de l'interconnexion de huit modules avec un boitier d'interconnexion dans un serveur selon un mode de réalisation.

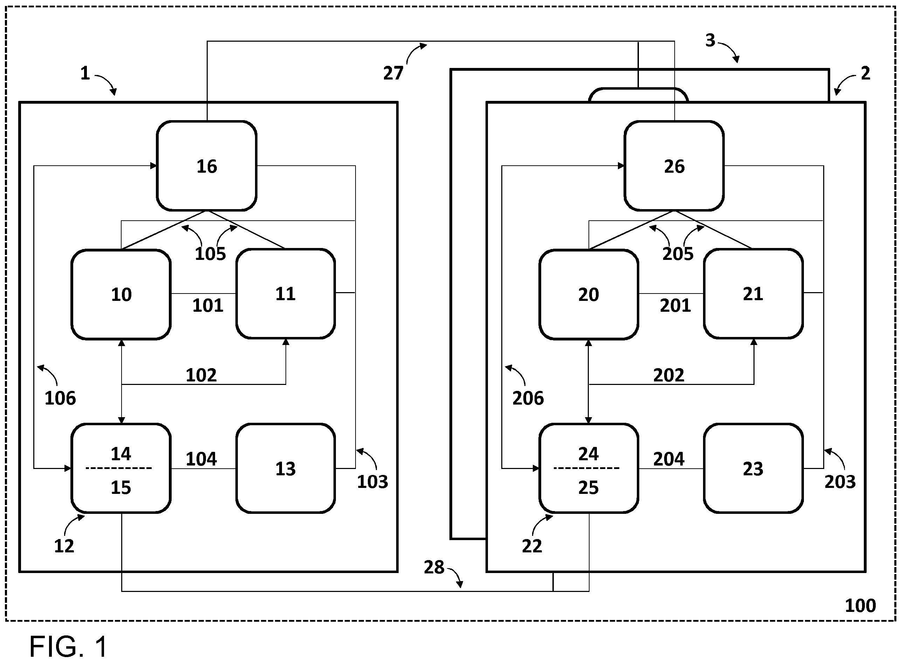

Sur la figure 1 est représenté un mode de réalisation d'un serveur **100** comprenant une pluralité de modules **1**, **2**, **3**, trois dans cet exemple, tels des cartes mères ou des cartes de circuits imprimés. Néanmoins, un tout autre nombre de modules peut être intégré dans le serveur **100**, par exemple huit.

Avantageusement, chacun des modules **1**, **2**, **3** est identique et comprend les éléments suivants :
- un ou plusieurs processeurs CPU **10**, **11**, **20**, **21** (acronyme anglais de « *Central Processing Unit* »). Dans l'exemple illustré, chaque module **1**,**2** est bi-socket, c'est-à-dire qu'il supporte respectivement deux processeurs CPU **10**, **11**, **20**, **21**. Avantageusement, les processeurs CPU **10**, **11**, **20**, **21** d'un même module **1**, **2**, **3** sont interconnectés entre eux via une liaison QPI **101**, **201**, acronyme anglais de « *QuickPath Interconnect* » ;
- un système sur une puce SOC **12**, **22**, par exemple un microcontrôleur, exécutant un micrologiciel de gestion. Dans un mode de réalisation, le micrologiciel comprend deux processus exécutés en parallèle, et aptes à échanger des informations, chacun réalisant respectivement de manière logique la fonction d'un composant : un composant BMC **14**, **24** et un composant contrôleur satellite de gestion du système désigné par la suite sous la dénomination composant SMC **15**, **25**, acronyme anglais de « *Satellite Management Controller* ». Avantageusement, les fonctions des composants BMC **14**, **24** et SMC **15**, **25** sont définies dans le standard IPMI. Dans un mode de réalisation, le SOC **12**, **22** est apte à échanger des données avec des processeurs CPU **10**, **11**, **20**, **21** via une « Interface de Contrôle de l'Environnement de la Plateforme », couramment désignée sous la dénomination interface PECI **102**, **202**, acronyme anglais de « *Platform Environment Control Interface* » ;
- un composant « réseau de portes programmables », couramment désigné sous l'appellation FPGA **13**, **23** (acronyme anglais de « *Field-Programmable Gate Array* »), permettant notamment la transmission de signaux à tout composant avec lequel il est interfacé, par exemple de signaux d'horloges, d'erreurs et/ou de réinitialisation. Avantageusement, le FPGA **13**, **23** comprend une liaison **103**, **203** apte à échanger des données avec les processeurs CPU **10**, **11**, **20**, **21** et une liaison **104**, **204** apte à échanger des données avec le SOC **12**, **22** ;
- des mémoires telles des caches associés aux processeurs CPU **10**, **11**, **20**, **21** ;
- un élément de communication **16**, **26** comprenant une liaison **105**, **205** avec chacun des processeurs CPU **10**, **11**, **20**, **21**, apte à assurer la cohérence d'une mémoire « globale » partagée entre les processeurs CPU **10**, **11**, **20**, **21** de chaque module **1**, **2**, **3**. Dans un mode de réalisation, l'élément de communication **16**, **26** est un composant de type BCS, acronyme anglais de « *Bull Cohérent Switch* », qui est une solution proposée par le déposant et disponible dans le commerce, ou toute version ultérieure de celui-ci tel le composant BCS2 (« *Bull Cohérent Switch* 2»)*.* L'élément de communication **16**, **26** est en outre apte à échanger des données avec le FPGA **13**, **23** via la liaison **103**, et avec le SOC **12**, **22** via un bus **106**, **206** selon le standard I²C.

Avantageusement, les modules **1**, **2**, **3** du serveur **100** sont interconnectés par des liens à hautes vitesses, réalisant les interconnexions suivantes :
- une interconnexion **27** des éléments de communication **16**, **26** des modules **1**, **2**, **3** via un réseau XQPI, acronyme anglais de « *eXtended QuickPath Interconnect* »*,* qui est une solution d'interconnexion proposée par le déposant et disponible dans le commerce. Avantageusement, l'interconnexion **27** permet aux éléments de communication **16**, **26** tels des BCS2 propres aux modules **1**, **2**, **3**, d'échanger des informations, assurant ainsi la cohérence mémoire de l'ensemble des modules **1**, **2**, **3**. L'interconnexion **27** via le réseau XQPI permet, en outre, le transport entre chaque module **1**, **2**, **3** de signaux de synchronisations, tels des signaux d'horloges dont la synchronisation est gérée par les FPGA **13**, **23** ;
- une interconnexion **28** des SOC **12**, **22** des modules **1**, **2**, **3** via un réseau privé en protocole Ethernet, encapsulant un protocole de communication en accord avec la norme IPMB, acronyme anglais de « *Intelligent Platform Management Bus* ». Dans l'état de l'art, la norme IPMB est utilisée sur des bus de communication, en accord avec le standard I²C. L'utilisation de la norme IPMB sur un réseau local LAN (acronyme anglais de « *Local Area Network* »), dite « IPMB sur LAN », telle que proposée ici présente comme avantages d'améliorer la performance, la fiabilité et la flexibilité des transmissions de données entre chacun des SOC **12**, **22** des modules **1**, **2**, **3** du serveur **100.**

Il est à noter que chaque lien de type l'interconnexion 28 comporte un lien Ethernet bidirectionnel et un ensemble de signaux side-band, dont les signaux SPI (pour Serial Peripheral Interface).

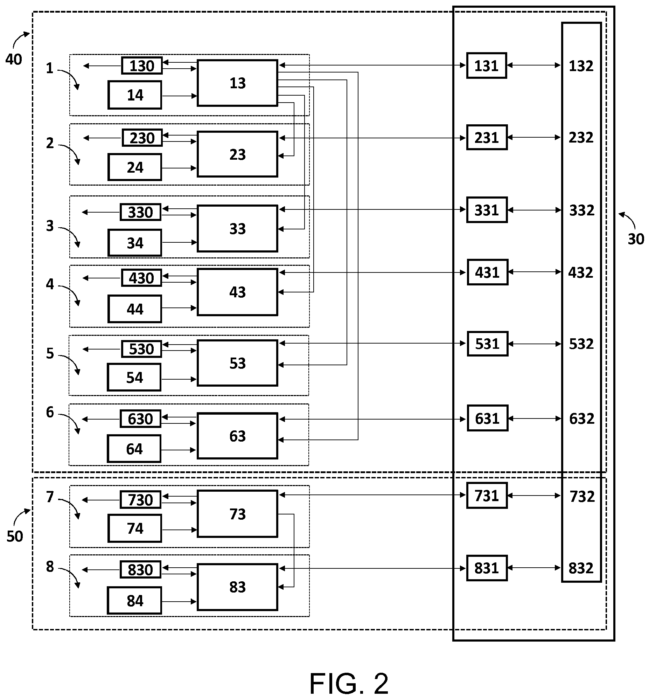

Dans un mode de réalisation, l'interconnexion **27** des éléments de communication **16**, **26** et l'interconnexion **28** des SOC **12**, **22** sont réalisées via l'intermédiaire d'un boitier d'interconnexion **30**, illustré sur la figure 2 et décrit ultérieurement. A titre d'exemple, le boitier d'interconnexion **30** est un « fond de panier », comprenant un commutateur réseau, couramment désigné par l'anglicisme « *switch* »*.*

Avantageusement, chaque composant BMC **14**, **24** implémenté sur chaque SOC **12**, **22** est utilisable comme interface d'échange de données, notamment entre chaque composant BMC **14**, **24** de chaque module **1**, **2**, **3**, ainsi qu'avec des applications externes de gestion d'équipements informatiques, comme toute interface de gestion standard. A titre d'exemple, une application externe de gestion d'équipement informatique utilisée pour le serveur **100**, se présente sous forme d'interface graphique proposée à un administrateur, lui permettant
- de superviser les paramètres physique d'un module **1**, **2**, **3** (ex : températures mesurées, tensions mesurées, détection de la présence/absence d'un câble d'interconnexion spécifique) ;
- communiquer au composant BMC une action appropriée à entreprendre en cas de détection d'anomalie (ex : mise sous/hors tension d'un module ou redémarrage d'un module **1**, **2**, **3**).

Pour ce faire, l'interconnexion **28** de chaque SOC **12**, **22** permet, d'un point de vue logique, l'interconnexion de chaque composant BMC **14**, **24** de chaque module **1**, **2**, **3**. Les composants BMC **14**, **24** de chacun des modules **1**, **2**, **3** sont donc aptes à échanger des informations entre eux, la mise en commun de leurs fonctions et de leurs informations permettant de présenter le serveur **100**, du point de vue d'une application externe de gestion d'équipement, comme un serveur **100** mono-module. Ainsi, chaque composant BMC **14**, **24** est programmé pour gérer les fonctions de haut-niveau, c'est-à-dire centrales, du serveur **100**, par exemple :
- la gestion de la mise sous-tension du serveur **100** ;
- la gestion d'un ou plusieurs composants SMC **15**, **25**, par exemple la supervision de leurs états, la réception de mesures ou tout autres données remontées par des composants SMC **15**, **25**, ou encore la transmission de messages de commande (pilotage) à destinations de composants SMC **15**, **25** ;
- un partitionnement de signaux d'horloges en fonction de partitions existantes entre différents modules **1**, **2**, **3**. On désigne par la suite, sous le terme partition dans un système multi-modules, un sous-ensemble de modules **1**, **2**, **3**, capables de fonctionner indépendamment des autres modules **1**, **2**, **3** de ce même système. A titre d'exemple, une partition est un sous-ensemble de modules **1**, **2**, **3** exécutant un même système d'exploitation OS (acronyme anglais d' « *Operating System* »), ou exécutant un même ensemble de systèmes d'exploitation OS si les modules comprennent des couches d'hyperviseurs. Avantageusement, toute méthode de partionnement apte à grouper un ou plusieurs ensembles de modules **1**, **2**, **3** partageant des caractéristiques communes, par exemple exécutant un même système d'exploitation OS, peut être utilisée ;
- la synchronisation et la diffusion, c'est-à-dire le routage, de signaux de synchronisation via l'interconnexion **27** au travers le réseau XQPI, en fonction de partitions existantes entre différents modules **1**, **2**, **3**.

Chaque composant SMC **15**, **25** permet quant à lui une gestion des fonctions de bas niveaux, c'est-à-dire locales, du module **1**, **2**, **3** sur lequel il est implanté, et communique au composant BMC **14**, **24** du même SOC **12**, **22** des données qu'il supervise, par exemple des mesures. A titre d'exemple, lors de la mise sous tension du serveur **100**, chaque composant SMC **15**, **25** met sous tension son propre module **1**, **2**, **3** selon un processus préconfiguré (ex : séquencement, programmation de son BCS2, contrôle des tensions) et rapporte au composant BMC **14**, **24** du même SOC **12**, **22** l'état de la mise sous tension de son module **1**, **2**, **3**. En outre, chaque composant SMC **15**, **25** supervise l'état de son propre matériel, par exemple mesure un nombre déterminé de paramètres de son propre module **1**, **2**, **3** (ex : température, tensions) et transmet ces informations au composant BMC **14**, **24** du même SOC **12**, **22**. Le composant BMC **14**, **24** est alors apte à prendre une décision en fonction des paramètres que le composant SMC **15**, **25** lui communique, par exemple redémarrer un module **1**, **2**, **3** particulier en cas de détection d'une anomalie. Ainsi, les composants matériels de chaque module **1**, **2**, **3** sont gérés par un composant SMC **15**, **25** local au module **1**, **2**, **3**, indépendamment des autres modules **1**, **2**, **3**, tandis que chaque composant BMC **15**, **25** peut gérer un nombre variable de modules **1**, **2**, **3** via l'interconnexion **28** à travers l'IPMB sur LAN. Avantageusement, un telle architecture est très souple car indépendante du nombre de modules **1**, **2**, **3**.

Selon un mode de réalisation, la topologie physique des liens Ethernet et SPI est de type étoile. Les signaux side-band de type horloge, CATERR ou TSC_SYNC sont en topologie physique maillée (dite, en anglais, « *all-to-all* »)*.* Selon divers autres modes de réalisations, d'autres topologies sont envisageables, par exemple des topologies de réseaux de Clos ou des tores multidimensionnels.

Avantageusement, le boitier d'interconnexion **30** est réalisé en fonction de la topologie choisie. A titre d'exemple, dans le cas d'un serveur **100 à** N modules, pour une topologie « *all-to-all* » chaque port d'interconnexion d'un module **1**, **2**, **3** doit supporter N-1 liens à haute vitesse allant vers chacun de ses voisins. Si dans une configuration à huit modules, où N =8, chaque module **1**, **2**, **3** comprend sept liens à huit voies unidirectionnelles, le boitier d'interconnexion **30** est alors réalisé de manière à supporter 8*7*8, soit 448 voies unidirectionnelles à haute vitesse.

En outre, afin d'améliorer la résilience du boitier d'interconnexion **30** en cas de panne, il est possible de réaliser le commutateur de ce boitier via une pluralité de commutateurs. Par exemple, pour un serveur **100** avec huit modules, afin d'interconnecter les SOC **12**, **22** des modules **1**, **2**, **3**, le commutateur du boitier d'interconnexion **30** est un commutateur Ethernet à huit ports. Un tel commutateur peut alors être réalisé via deux commutateurs à cinq ports de la manière suivante : si chacun des commutateurs comprend quatre ports de liens descendants de données (dits ports « *downlink* ») et un port de lien montant de données (dit port « *uplink* »), on relie alors les ports « *uplink* » via une trace de circuit imprimé. Ainsi, les SOC **12**, **22** des modules **1**, **2**, **3** ne peuvent perdre la totalité de leurs moyens de dialogue qu'en cas de panne de l'ensemble des commutateurs, ce risque diminuant proportionnellement au vu du nombre de commutateurs employés pour la réalisation du commutateur du boitier d'interconnexion **30.**

Pour les mêmes raisons de résilience, l'ensemble des composants matériels qui fournissent les liaisons physiques entre les modules sont des composants passifs. Avantageusement, ces composants passifs sont choisis de manière à avoir un « temps moyen entre pannes » MTBF (acronyme anglais de « *mean time between failures* » supérieur de plusieurs ordres de grandeur au MTBF des modules **1**, **2**, **3.** Ainsi, le nombre de pannes créés par ces composants est négligeable lorsque l'on cherche à évaluer la disponibilité du serveur **100.**

Toujours en vue d'assurer une bonne résilience vis-à-vis des pannes d'alimentation électrique, chaque module **1**, **2**, **3** comprend au moins deux blocs d'alimentation PSU (acronyme anglais de « *Power Supply Unit* »), pouvant , à titre d'exemple, se présenter sous la forme de convertisseurs AC/DC (acronyme anglais de « *Alternating Current*/*Direct Current* »), délivrant une puissance en entrée de chaque module **1**, **2**, **3**, par exemple sous 12V. Chacun des blocs d'alimentation PSU peut par ailleurs être dimensionné avec une redondance 2N, c'est-à-dire comprendre un doublement de leurs composants techniques (ex : composants électroniques), et peuvent être connectés à deux réseaux de courant alternatif AC indépendants, permettant de garantir le fonctionnement du serveur **100** si un des réseaux est défaillant. Le boitier d'interconnexion **30** est quant à lui alimenté électriquement par les modules **1**, **2**, **3**, chacun envoyant à travers les liens Ethernet de l'interconnexion **28** un courant sous une tension prédéfinie, par exemple 12V. Ces courants sont alors sommés par un dispositif électronique approprié constitutif du boitier d'interconnexion **30**, par exemple, un aiguillage à diode. Dans l'état de l'art, le standard PoE, acronyme anglais de « *Power-over-Ethernet* »*,* décrit l'alimentation électrique de dispositifs interfacés via une liaison Ethernet avec un commutateur, grâce à l'alimentation électrique commutateur. Une panne électrique du commutateur empêche donc toute alimentation des dispositifs. Par opposition à ce standard, le mode de réalisation décrit ci dessus permet de réduire les impacts d'une panne d'alimentation sur le serveur **100**, celles-ci se limitant alors au périmètre d'une panne éventuelle d'un module **1**, **2**, **3**, une telle probabilité de panne se voyant réduite grâce à la redondance des blocs d'alimentations. Ainsi, l'ensemble des liaisons Ethernet réalisées via l'interconnexion **27** des modules **1**, **2**, **3** collaborent de manière à fournir une alimentation électrique redondante au commutateur du boitier d'interconnexion **30**, seul ce commutateur comprenant des composants actifs. Le commutateur du boitier d'interconnexion **30** est donc capable de fonctionner en dépit d'une panne éventuelle d'un ou plusieurs modules **1**, **2**, **3**. Avantageusement, la puissance dissipée par ce commutateur est très basse (de l'ordre de 2 à 3 Watts) et le nombre de composants présents dans ce commutateur permet de fournir un MTBF de l'ordre de plusieurs millions d'heures. On veille, de plus, à configurer l'ensemble des composants BMC **14**, **24** des SOC **12**, **22** pour superviser le fonctionnement de ce commutateur et gérer tout dysfonctionnement. Avantageusement, les modes de réalisations décrits ci-dessus permettent à tout module **1**, **2**, **3** de résister à une panne du commutateur du boitier d'interconnexion **30**, et ce en dépit de sa position centrale. Si une défaillance est détectée sur le commutateur, le remplacement à chaud de ce module n'interrompt donc pas le fonctionnement du serveur **100** multi-modulaire.

La figure 2 illustre l'interconnexion de huit modules **1**, **2**, **3**, **4**, **5**, **6**, **7**, **8** avec un boitier d'interconnexion **30**, selon un mode de réalisation, et en accord avec les caractéristiques précédemment décrites. Sur cette figure, chaque module **1**, **2**, **3**, **4**, **5**, **6**, **7**, **8** comprend respectivement les éléments précédemment cités, notamment :
- un FPGA **13**, **23**, **33**, **43**, **53**, **63**, **73**, **83** apte à gérer un signal d'horloge **130**, **230**, **330**, **430**, **530**, **630**, **730**, **830** spécifique. La gestion de ces signaux est détaillée ultérieurement ;
- un composant BMC **14**, **24**, **34**, **44**, **54**, **64**, **74**, **84** apte à gérer des fonctions haut niveau telles l'instanciation, la mise sous tension le redémarrage et l'instanciation des modules **1**, **2**, **3**, **4**, **5**, **6**, **7**, **8**.

Les éléments de communication **16, 26,** les processeurs CPU **10, 11, 20, 21,** les SOC **12, 22** et interconnexions **27, 28** ne sont pas représentés sur cette figure afin de simplifier la lecture de celle-ci, mais restent néanmoins présents. Notamment, chaque module **1, 2, 3, 4, 5, 6, 7, 8** est respectivement interconnecté par son élément de communication **16, 26** et son SOC **12, 22** aux autres modules **1, 2, 3, 4, 5, 6, 7, 8,** respectivement via les interconnexions **27, 28** et par l'intermédiaire du boitier d'interconnexion **30.**

Dans un mode de réalisation, la connexion de chaque module **1, 2, 3, 4, 5, 6, 7, 8** au boitier d'interconnexion **30** est réalisée au niveau de ce dernier respectivement via un bus de données synchrone SPI **131, 231, 331, 431, 531, 631, 731, 831,** acronyme anglais de « *Serial Peripheral Interface* »*.* Les échanges de données entre chaque module **1, 2, 3, 4, 5, 6, 7, 8** et le boitier d'interconnexion **30** via les bus de données synchrone SPI **131, 231, 331, 431, 531, 631, 731, 831** sont représentés sur cette figure par des doubles flèches entre ces éléments. En outre, chacun des bus de données synchrone SPI **131, 231, 331, 431, 531, 631, 731, 831** est respectivement interfacé avec un registre **132, 232, 332, 432, 532, 632, 732, 832** d'un dispositif annexe du boitier d'interconnexion **30,** ici un FPGA. Avantageusement, le FPGA du boitier d'interconnexion **30** va permettre d'allouer à chaque SOC **12, 22** de chaque module **1, 2, 3, 4, 5, 6, 7, 8** un identifiant lors d'une phase d'initialisation. Les échanges d'informations entre les bus de données synchrones SPI **131, 231, 331, 431, 531, 631, 731, 831** et les registres **132, 232, 332, 432, 532, 632, 732, 832** sont ici symbolisés par des doubles flèches entre ces éléments. Une phase d'initialisation des modules **1, 2, 3, 4, 5, 6, 7, 8** peut, à titres d'exemples, survenir lors d'une mise sous tension, d'un redémarrage du serveur **100** ou encore lors de l'initialisation d'un SOC **12, 22** par un composant BMC **14, 24, 34, 44, 54, 64, 74, 84.**

Comme expliqué précédemment, une interconnexion **28** de chaque SOC **12, 22** de chaque module **1, 2, 3, 4, 5, 6, 7, 8** est réalisée via le boitier de communication **30** au travers un réseau privé en protocole Ethernet, encapsulant un protocole de communication en accord avec la norme IPMB. Chaque SOC **12, 22** doit donc lors d'une phase d'initialisation pouvoir démarrer sa connexion IP (acronyme anglais de « Internet Protocol ») via une adresse différente de celle de ses voisins. Pour ce faire, selon divers modes de réalisations, chaque FPGA **13, 23, 33, 43, 53, 63, 73, 83** envoie par l'intermédiaire du SOC **12, 22** avec lequel il est interfacé, via l'interconnexion **28,** une requête d'identifiant au boitier d'interconnexion **30.** Chaque requête est réceptionnée par le boitier de communication **30,** au niveau du bus de données synchrone SPI **131, 231, 331, 431, 531, 631, 731, 831,** ce dernier transmettant chaque requête au registre **132, 232, 332, 432, 532, 632, 732, 832** du FPGA avec lequel il est interfacé. Avantageusement, chaque requête permet l'obtention d'un identifiant ID unique et connu seulement du registre **132, 232, 332, 432, 532, 632, 732, 832** du FPGA. Cet identifiant ID est délivré au moyen des signaux du bus SPI qui sont physiquement indépendant des signaux Ethernet (bien entendu, les signaux side-band ne faisant pas partie intégrante de l'interface XQPI).

Dans un mode de réalisation, chaque identifiant ID se rapporte à un numéro de port, codé par exemple sur trois bits, cette identifiant ID étant spécifique à chaque emplacement de connexion physique au module d'interconnexion **30.** Avantageusement, cet identifiant ID est unique et permet donc d'identifier par la suite un module **1, 2, 3, 4, 5, 6, 7, 8** spécifique. Le boitier de communication **30,** communique alors grâce à son FPGA, un identifiant ID en réponse à chaque requête réceptionnée, cette réponse étant transmise par l'intermédiaire du bus de données synchrone SPI **131, 231, 331, 431, 531, 631, 731, 831** puis par le SOC **12, 22** au FPGA **13, 23, 33, 43, 53, 63, 73, 83** du module **1, 2, 3, 4, 5, 6, 7, 8** ayant émis la requête. L'identifiant ID réceptionné par le FPGA **13, 23, 33, 43, 53, 63, 73, 83,** est ensuite lu par le composant BMC **14, 24, 34, 44, 54, 64, 74, 84** du SOC **12, 22** avec lequel il est interfacé en vue de déterminer une instanciation appropriée, par exemple l'attribution d'une adresse IP au module **1, 2, 3, 4, 5, 6, 7, 8.** La lecture de l'identifiant ID par chaque composant BMC **14, 24, 34, 44, 54, 64, 74, 84** dans chaque FPGA **13, 23, 33, 43, 53, 63, 73, 83** est symbolisée sur cette figure par une flèche unilatérale entre ces éléments. Dans un mode de réalisation, chaque composant BMC **14, 24, 34, 44, 54, 64, 74, 84** applique à cet identifiant ID un algorithme de calcul d'adresse IP afin de déterminer et instancier dynamiquement l'adresse IP de son module **1, 2, 3, 4, 5, 6, 7, 8.** Par ailleurs, chaque FPGA **13, 23, 33, 43, 53, 63, 73, 83** est capable de lire par l'intermédiaire du bus de données synchrone SPI **131, 231, 331, 431, 531, 631, 731, 831** le nombre de modules **1, 2, 3, 4, 5, 6, 7, 8** connectés au boitier d'interconnexion. Ainsi, le composant BMC **14, 24, 34, 44, 54, 64, 74, 84** de chaque module **1, 2, 3, 4, 5, 6, 7, 8** est aussi apte à déduire l'adresse IP des modules **1, 2, 3, 4, 5, 6, 7, 8** voisins via l'application du même algorithme de calcul d'adresse IP. L'ensemble des adresses IP déterminées peuvent ensuite à titre d'exemple être mémorisées par le **13, 23, 33, 43, 53, 63, 73, 83.**

Dans un autre mode de réalisation, les adresses IP de chaque module **1, 2, 3, 4, 5, 6, 7, 8** sont des adresses de type IPv4, formées de 32 bits. On suppose, en outre, que chaque adresse IP comporte ving-neuf bits de poids forts communs, une telle configuration étant applicable dans un réseau Ethernet privé tel celui de l'interconnexion **28.** Après récupération de chaque identifiant ID par chacun des FPGA **13, 23, 33, 43, 53, 63, 73, 83,** chaque composant BMC **14, 24, 34, 44, 54, 64, 74, 84** complète alors cette adresse IP en complétant les trois bits de poids faibles restants par les trois bits de l'identifiant ID qu'il aura lu au niveau de son FPGA **13, 23, 33, 43, 53, 63, 73, 83.** Ainsi, chaque composant BMC **14, 24, 34, 44, 54, 64, 74, 84** peut être vu comme une interface de configuration ou reconfiguration dynamique (c'est-à-dire d'auto-configuration) des modules **1, 2, 3, 4, 5, 6, 7, 8** permettant notamment leur instanciation, c'est-à-dire l'attribution d'une adresse IP ou plus généralement d'un identifiant à chacun de ces modules **1**, **2**, **3**, **4**, **5**, **6**, **7**, **8.**

Chaque module **1, 2, 3, 4, 5, 6, 7, 8** comprend, en outre, un générateur d'horloge, apte à générer un signal d'horloge **130**, **230**, **330**, **430, 530, 630, 730, 830** qui lui est propre. Une telle horloge est à titre d'exemple réalisée sous la forme d'un signal carré dont la fréquence est de l'ordre du MHz, par exemples 14.7MHz, 25MHz ou 100MHz. Avantageusement, un signal d'horloge **130**, **230**, **330**, **430**, **530**, **630**, **730, 830** dans un module **1, 2, 3, 4, 5, 6, 7, 8** permet la synchronisation de l'ensemble des processeurs CPU **10, 11, 20, 21** de ce module **1, 2, 3, 4, 5, 6, 7, 8.** La distribution de chaque signal d'horloge **130**, **230**, **330, 430, 530, 630, 730, 830** vers les processeurs CPU **10, 11, 20, 21** de chaque module **1, 2, 3, 4, 5, 6, 7, 8,** est ici représentée par les flèches unidirectionelles à gauche des éléments **130**, **230**, **330**, **430**, **530, 630, 730, 830.**

Selon divers modes de réalisations, chaque signal d'horloge **130**, **230, 330, 430, 530, 630, 730, 830** peut être transmis par l'interconnexion **27** via le réseau XQPI. Avantageusement, chaque signal d'horloge **130**, **230**, **330**, **430**, **530**, **630**, **730**, **830** peut être filtré à l'entrée de chaque module **1, 2, 3, 4, 5, 6, 7, 8** par un circuit électronique de type boucle à phase asservie PLL, acronyme anglais de « *Phase-Locked Loop* », apte à éliminer tout bruit de phase introduit par les liaisons physiques de l'interconnexion **27.**

Les signaux d'horloge **130**, **230**, **330**, **430**, **530**, **630**, **730**, **830** pouvant être des signaux inter modules, c'est-à-dire transitant entre différents modules **1, 2, 3, 4, 5, 6, 7, 8** une synchronisation de ces signaux s'avère en outre nécessaire.

Pour ce faire, selon divers modes de réalisations, chaque FPGA **13, 23, 33, 43, 53, 63, 73, 83** de chaque module **1, 2, 3, 4, 5, 6, 7, 8** est apte, lors d'une étape de partionnement à grouper l'ensemble des modules **1, 2, 3, 4, 5, 6, 7, 8** en fonction de caractéristiques communes, par exemple en fonction d'un même système d'exploitation OS supporté par les modules **1, 2, 3, 4, 5, 6, 7, 8,** formant ainsi des partitions. Chaque module **1, 2, 3, 4, 5, 6, 7, 8** appartient donc à un ensemble ou une partition (c'est-à-dire un sous-ensemble) de modules **1, 2, 3, 4, 5, 6, 7, 8,** constitutif du serveur **100.** A titre d'exemple, sur la figure 2, deux partitions **40, 50** sont réalisées : la première partition **40** est formée des modules **1, 2, 3, 4, 5, 6** et la deuxième partition **50** est formée des modules **7, 8.**

Chaque composant BMC **14, 24, 34, 44, 54, 64, 74, 84** compare alors dans l'ensemble ou le sous-ensemble (c'est-à-dire la partition) auquel il appartient, le numéro de son propre module **1, 2, 3, 4, 5, 6, 7, 8** avec les numéros des modules **1, 2, 3, 4, 5, 6, 7, 8** du même ensemble ou sous-ensemble. Comme exposé précédemment, le numéro d'un module **1, 2, 3, 4, 5, 6, 7, 8** et de ses modules **1, 2, 3, 4, 5, 6, 7, 8** voisins est identifié, lors d'une étape d'instanciation dynamique effectué par son composant BMC **14, 24, 34, 44, 54, 64, 74, 84.**

Basé sur le résultat de ces comparaisons, chaque BMC **14, 24, 34, 44, 54, 64, 74, 84** est apte à identifier si le module **1, 2, 3, 4, 5, 6, 7, 8** auquel il appartient est un module maître ou esclave dans l'ensemble ou le sous-ensemble de modules **1, 2, 3, 4, 5, 6, 7, 8.** Dans un mode de réalisation, le module **1, 2, 3, 4, 5, 6, 7, 8** de plus petit numéro/identifiant ID est identifié par son BMC **14, 24, 34, 44, 54, 64, 74, 84** comme le module maître, tandis que les modules restants sont identifiés comme modules esclaves. Cependant, tout autre type d'identification peut être réalisée, par exemple le module maître peut être identifié comme étant le module de plus grand numéro/identifiant ID, ou encore identifié en fonction de son adresse. Plus généralement, les modules maîtres et esclaves sont identifiés dans un même ensemble ou sous-ensemble de modules **1, 2, 3, 4, 5, 6, 7, 8,** en fonction d'informations d'identification des modules **1, 2, 3, 4, 5, 6, 7, 8,** obtenus lors de leur instanciation dynamique.

Par soucis de simplification, on considère par la suite l'exemple dans lequel le module **1, 2, 3, 4, 5, 6, 7, 8** de plus petit numéro dans un ensemble ou un sous-ensemble est identifié par chaque composant BMC **14, 24, 34, 44, 54, 64, 74, 84** comme le module maître, tandis que les modules restants sont identifiés comme modules esclaves.

Selon divers modes de réalisations, si le composant BMC **14, 24, 34, 44, 54, 64, 74, 84** identifie son module **1, 2, 3, 4, 5, 6, 7, 8** comme étant un module
- maître, le composant BMC **14, 24, 34, 44, 54, 64, 74, 84** configure son FPGA **13, 23, 33, 43, 53, 63, 73, 83** de manière à ce que celui-ci distribue son signal d'horloge **130, 230, 330, 430, 530, 630, 730, 830** aux autres modules **1, 2, 3, 4, 5, 6, 7, 8** du même ensemble ou sous ensemble ;
- esclave, le composant BMC **14, 24, 34, 44, 54, 64, 74, 84** configure son FPGA **13, 23, 33, 43, 53, 63, 73, 83** de manière à ce que celui-ci désactive le signal d'horloge **130, 230, 330, 430, 530, 630, 730, 830** local à ce module **1, 2, 3, 4, 5, 6, 7, 8.**

A titre d'exemple, dans un même ensemble de huit modules **1, 2, 3, 4, 5, 6, 7, 8** non-partitionné, le module **1** est identifié comme module maître et les modules **2, 3, 4, 5, 6, 7, 8** comme modules esclaves. Le module **1** distribue alors son signal d'horloge **130** aux modules **2, 3, 4, 5, 6, 7, 8,** ces derniers ayant leur signal d'horloge **230, 330, 430, 530, 630, 730, 830** désactivé par leur FPGA. La distribution du signal d'horloge **130** et la désactivation locale des signaux d'horloge **230, 330, 430, 530, 630, 730, 830** sont ici réalisées respectivement par le FPGA **13** et les FPGA **23, 33, 43, 53, 63, 73, 83** ceux-ci étant respectivement configurés par le composant BMC **14** et les composants BMC **24, 34, 44, 54, 64, 74, 84.** L'horloge est transmise par un signal side-band, et fait donc partie de l'interconnexion **28** (c.à.d. l'interface inter FPGA).

Dans, un autre exemple illustré sur la figure 2:
- le module **1** est identifié comme le module maître dans la première partition **40,** les modules **2, 3, 4, 5, 6** étant identifiés comme des modules esclaves dans cette partition. Le module **1** distribue alors par l'intermédiaire de son FPGA **13** (flèches unidirectionelles issues de cet élément), son signal d'horloge **130** aux modules **2, 3, 4, 5, 6,** ces derniers ayant désactivé localement via leur FPGA **23, 33, 43, 53, 63** leur signal d'horloge **130, 230, 330, 430, 530, 630** (flèches unidirectionnelles dans le sens FPGA vers signal d'horloge). Avantageusement, la configuration du FPGA **13** et des FPGA **23, 33, 43, 53, 63** est réalisée respectivement par le composant BMC **14** et les composants BMC **24, 34, 44, 54, 64** (flèches unidirectionnelles dans le sens signal d'horloge vers FPGA);
- le module **7** est identifié comme le module maître dans la deuxième partition **50,** le module **8** étant identifié comme un module esclave dans cette partition. Le module **7** distribue alors par l'intermédiaire de son FPGA **73** (flèche unidirectionnelle issue de cet élément), son signal d'horloge **730** au module **8,** ce dernier ayant désactivé localement son signal d'horloge **830** via son FPGA **63** (flèche unidirectionnelle dans le sens FPGA vers signal d'horloge). Avantageusement, la configuration du FPGA **73** et du FPGA **83,** est réalisée respectivement par le composant BMC **74** et le composant BMC **84** (flèche unidirectionnelle dans le sens signal d'horloge vers FPGA).

Chaque processeur CPU **10, 11, 20, 21** de chaque module **1, 2, 3, 4, 5, 6, 7, 8** est donc piloté par un signal d'horloge **130, 230, 330, 430, 530, 630, 730, 830** commun à la partition ou l'ensemble de modules **1, 2, 3, 4, 5, 6, 7, 8** auquel il appartient. Avantageusement, chaque processeur CPU **10, 11, 20, 21** comprend une pluralité de registres, chaque registre se rapportant à un processus léger (« *thread* » en anglais) exécuté par le processeur **10, 11, 20, 21.** Ces registres sont couramment désignés sous la dénomination compteurs d'horodatage TSC (acronyme anglais de « *Time Stamp Counter* »), et servent à synchroniser des tâches « *multi-threads* », c'est-à-dire comportant une pluralité de processus légers. Les compteurs d'horodatage TSC sont initialisés pour chaque processeur CPU **10, 11, 20, 21** après une étape d'initialisation/réinitialisation (« *reset* » en anglais) pouvant, par exemple, survenir lors de la mise sous tension/du redémarrage d'un module **1, 2, 3, 4, 5, 6, 7, 8.** Pour une bonne exécution des tâches « *multi-threads* », les compteurs d'horodatage TSC doivent donc être parfaitement synchronisés. Avantageusement, la synchronisation des compteurs d'horodatage TSC s'effectue via les signaux d'horloges, **130, 230, 330, 430, 530, 630, 730, 830** en entrée des processeurs CPU **10, 11, 20, 21.** Une telle synchronisation est complexe à assurer, particulièrement pour des modules **1, 2, 3, 4, 5, 6, 7, 8** interconnectés comprenant chacun une pluralité de processeurs **10, 11, 20, 21,** car chaque processeur CPU **10, 11, 20, 21** peut comporter initialement et de manière locale son propre signal d'horloge **130, 230, 330, 430, 530, 630, 730, 830.** Les compteurs d'horodatage TSC entre chaque module **1, 2, 3, 4, 5, 6, 7, 8** sont donc potentiellement incohérents d'un point de vue temporel et peuvent par ailleurs dériver.

Ainsi, selon divers modes de réalisations, après une étape de partionnement éventuelle des modules **1, 2, 3, 4, 5, 6, 7, 8,** la synchronisation des compteurs d'horodatage TSC des processeurs CPU **10, 11, 20, 21** s'effectue de la manière suivante :
- chaque composant BMC **14, 24, 34, 44, 54, 64, 74, 84** de chaque module maître d'un ensemble ou sous ensemble de modules **1, 2, 3, 4, 5, 6, 7, 8** effectue une configuration du FPGA **13, 23, 33, 43, 53, 63, 73, 83** du module maître, de manière à ce que le routage de tout signal de synchronisation, soit circonscrit aux modules esclaves du même ensemble ou sous-ensemble ;
- chaque composant BMC **14, 24, 34, 44, 54, 64, 74, 84** de chaque module esclave envoie, via l'interconnexion **28** au travers le réseau IPMB sur LAN, un message de notification au composant BMC **14, 24, 34, 44, 54, 64, 74, 84** du module maître lorsque le module esclave sort d'une phase d'initialisation ou de réinitialisation (correspondant à une initialisation des compteurs d'horodatage TSC). Le composant BMC **14, 24, 34, 44, 54, 64, 74, 84** du module maître peut par ailleurs être informé via une notification de l'initialisation ou de la réinitialisation de son propre module **1, 2, 3, 4, 5, 6, 7, 8** ;
- le composant BMC **14, 24, 34, 44, 54, 64, 74, 84** du module maître attend que tous les modules **1, 2, 3, 4, 5, 6, 7, 8,** y compris lui-même, soient sortis de la phase de d'initialisation ou de réinitialisation;
- lorsque les notifications de l'ensemble des modules **1, 2, 3, 4, 5, 6, 7, 8** ont été reçues, le BMC **14, 24, 34, 44, 54, 64, 74, 84** du module maître déclenche une réinitialisation de l'ensemble des compteurs d'horodatage TSC des processeurs CPU **10, 11, 20, 21** pour tous les modules **1, 2, 3, 4, 5, 6, 7, 8** du même ensemble ou sous-ensemble auquel il appartient, y compris pour son module. Avantageusement, cette réinitialisation est réalisée par l'envoi d'un signal de synchronisation sur une broche physique de connexion (« *pin* » en anglais) que possède chaque processeur CPU **10, 11, 20, 21** de chaque module **1, 2, 3, 4, 5, 6, 7, 8.** L'envoi d'un tel signal de synchronisation provoque donc un redémarrage synchrone de l'ensemble des compteurs d'horodatage TSC des processeurs CPU **10, 11, 20, 21** et donc leur cohérence temporelle, car chaque processeur CPU **10, 11, 20, 21** démarre alors des compteurs TSC pilotés par une même horloge dans l'ensemble ou le sous-ensemble de modules **1, 2, 3, 4, 5, 6, 7, 8.**

Par ailleurs, comme exposé lors de la description de la figure 1, chaque FPGA **13, 23, 33, 43, 53, 63, 73, 83** de chaque module **1, 2, 3, 4, 5, 6, 7, 8** comprend une liaison de données avec chacun des processeurs CPU **10, 11, 20, 21** ainsi qu'avec un élément de communication **16, 26** tel un BCS2. Lorsqu'une première erreur de type non-corrigée, fatale ou catastrophique se produit au niveau d'un processeur CPU **10, 11, 20, 21** ou d'un élément de communication **16, 26** d'un module **1, 2, 3, 4, 5, 6, 7, 8,** celle-ci peut se propager à très grande vitesse, généralement en quelques microsecondes, via l'interconnexion **27** au travers le réseau XQPI, aux autres modules **1, 2, 3, 4, 5, 6, 7, 8** du même ensemble ou sous-ensemble, engendrant des erreurs au niveau de leurs processeurs CPU **10, 11, 20, 21** et de leurs éléments de communication **16, 26.** Il faut donc, dans un contexte multi-modulaire, être alors en mesure de retrouver la première erreur, en vue de diagnostiquer la panne. Plus généralement, il faut aussi être en mesure d'identifier (ex : localiser, dater) de manière précise toute occurrence d'erreur dans un module **1, 2, 3, 4, 5, 6, 7, 8.**

Ainsi, selon divers modes de réalisations, on utilise aussi pour chaque FPGA **13, 23, 33, 43, 53, 63, 73, 83** un compteur d'horodatage TSC, réalisé par un registre de taille configurable, par exemple de quarante bits, et synchronisé via le signal d'horloge **130, 230, 330, 430, 530, 630, 730, 830** du module maître de l'ensemble ou sous-ensemble de modules **1, 2, 3, 4, 5, 6, 7, 8** auquel appartient le FPGA **13, 23, 33, 43, 53, 63, 73, 83,** par exemple à une fréquence de 25MHz. Chacun des FPGA **13, 23, 33, 43, 53, 63, 73, 83** possède donc un compteur d'horodatage TSC parfaitement synchronisé avec ceux des FPGA **13, 23, 33, 43, 53, 63, 73, 83** du même ensemble ou sous-ensemble de modules **1, 2, 3, 4, 5, 6, 7, 8.** Avantageusement, grâce à cette référence de temps synchrone, chaque FPGA **13, 23, 33, 43, 53, 63, 73, 83** est capable de dater (« *timestamp* ») et enregistrer un rapport concernant une erreur ou un événement quelconque qui a lieu dans son module **1, 2, 3, 4, 5, 6, 7, 8.** Il sera donc possible à tout moment de reconstituer la chronologie de plusieurs erreurs ou événements sans ambiguïté sur leur ordre respectif. Pour ce faire, suite à l'horodatage par les FPGA **13, 23, 33, 43, 53, 63, 73, 83** d'événements, par exemple d'erreurs propagées dans chaque module **1, 2, 3, 4, 5, 6, 7, 8,** l'ensemble des composants BMC **14, 24, 34, 44, 54, 64, 74, 84** sont aptes à échanger et partager des informations relatives à ces événements, permettant notamment de retrouver la source de ces erreurs, c'est-à-dire la première erreur. La localisation et le diagnostic précis d'un module **1, 2, 3, 4, 5, 6, 7, 8** défaillant s'en voient donc facilités.

Selon divers modes de réalisations, après une étape de partionnement éventuelle des modules **1, 2, 3, 4, 5, 6, 7, 8,** la synchronisation des compteurs d'horodatage TSC des FPGA **13, 23, 33, 43, 53, 63, 73, 83,** ainsi que la détection d'une première erreur s'effectue de la manière suivante :
- chaque composant BMC **14, 24, 34, 44, 54, 64, 74, 84** de chaque module maître d'un ensemble ou sous ensemble de modules **1, 2, 3, 4, 5, 6, 7, 8** effectue une configuration du FPGA **13, 23, 33, 43, 53, 63, 73, 83** du module maître, de manière à ce que le routage de tout signal de synchronisation, soit circonscrit aux modules esclaves du même ensemble ou au sous-ensemble ;
- chaque composant BMC **14, 24, 34, 44, 54, 64, 74, 84** de chaque module esclave envoie, via l'interconnexion **28** au travers le réseau IPMB sur LAN, un message de notification au composant BMC **14, 24, 34, 44, 54, 64, 74, 84** du module maître lorsque le module esclave sort d'une phase d'initialisation ou de réinitialisation (correspondant à une initialisation des compteurs d'horodatage TSC). Le composant BMC **14, 24, 34, 44, 54, 64, 74, 84** du module maître peut par ailleurs être informé via une notification de l'initialisation ou de la réinitialisation de son propre module **1, 2, 3, 4, 5, 6, 7, 8 ;**
- le composant BMC **14, 24, 34, 44, 54, 64, 74, 84** du module maître attend que tous les modules **1, 2, 3, 4, 5, 6, 7, 8,** y compris lui-même, soient sortis de la phase de d'initialisation ou de réinitialisation;
- lorsque les notifications de l'ensemble des modules **1, 2, 3, 4, 5, 6, 7, 8** ont été reçues, le BMC **14, 24, 34, 44, 54, 64, 74, 84** du module maître déclenche une réinitialisation de l'ensemble des compteur d'horodatage TSC des FPGA **13, 23, 33, 43, 53, 63, 73, 83** de tous les modules **1, 2, 3, 4, 5, 6, 7, 8** du même ensemble ou sous-ensemble auquel il appartient, y compris pour lui-même. Les compteurs d'horodatage des différents FPGA **13, 23, 33, 43, 53, 63, 73, 83** sont alors parfaitement synchronisés ;
- à chaque occurrence d'une erreur (ou d'un événement) survenant dans le module **1, 2, 3, 4, 5, 6, 7, 8** , par exemple au niveau d'un processeur CPU **10, 11, 20, 21** ou d'un élément de communication **16, 26** (ex : un BCS2), le FPGA **13, 23, 33, 43, 53, 63, 73, 83** de ce module **1, 2, 3, 4, 5, 6, 7, 8** mémorise via son compteur d'horodatage TSC des informations relatives à l'erreur. Les informations relatives à l'erreur comprennent à titres d'exemples, son type (ex : non-corrigée, fatale), sa source (ex : numéro de module, type de composant concerné : CPU ou BCS), ainsi que son horodatage ;
- chaque composant BMC **14, 24, 34, 44, 54, 64, 74, 84** de chaque module **1, 2, 3, 4, 5, 6, 7, 8,** accède alors aux informations mémorisées par le compteur d'horodatage TSC dans le FPGA **1, 2, 3, 4, 5, 6, 7, 8** et rend de manière appropriée ces informations accessibles à tout administrateur du serveur **100** ou outil extérieur permettant la gestion du serveur **100.** A titre d'exemple, chaque composant BMC **14, 24, 34, 44, 54, 64, 74, 84** communique les informations lues dans le FPGA **1, 2, 3, 4, 5, 6, 7, 8** via un fichier de log accessible depuis une application externe de gestion d'équipements ;
- une étape de comparaison entre les informations, par exemple entre l'horodatage, la source, le type de chaque erreur, communiquées par chaque composant BMC **14, 24, 34, 44, 54, 64, 74, 84** permet alors d'identifier une première erreur parmi un ensemble d'erreurs survenues dans différents modules **1, 2, 3, 4, 5, 6, 7, 8,** ainsi que la chronologie des erreurs suivantes. Une telle étape de comparaison peut, par exemples, être automatisée ou effectuée directement par l'administrateur du serveur **100.** Avantageusement, l'identification, par exemple la détermination de la chronologie et la localisation, de la première erreur permet par la suite, de décider éventuellement d'une ou plusieurs actions à effectuer sur le serveur **100,** par exemple redémarrer un module **1, 2, 3, 4, 5, 6, 7, 8** spécifique, ou reconfigurer une partition si un module **1, 2, 3, 4, 5, 6, 7, 8** dans celle-ci est défaillant.

Avantageusement, les modes de réalisation précédemment décrits permettent la compatibilité logicielle avec des interfaces de gestion standard, par exemple des interfaces en accord avec la norme IPMI, et ce quelque soient le nombre de modules **1, 2, 3, 4, 5, 6, 7, 8** constitutifs du serveur **100.** Ceci est notamment rendu possible grâce :
- aux composants BMC **14, 24, 34, 44, 54, 64, 74, 84,** chacun étant utilisable comme une interface de communication de données, permettant notamment la synchronisation des horloges, des compteurs d'horodatage TSC, ainsi que la gestion des fonctions haut niveau, c'est-à-dire les fonctions centrales, des différents modules **1, 2, 3, 4, 5, 6, 7, 8 ;**
- aux composants SMC **15, 25** en charges de gérer les fonctions bas niveau, c'est-à-dire locales de leurs propres modules **1, 2, 3, 4, 5, 6, 7, 8,** par exemple la mesure de leur paramètres physiques et leur mise sous tension.
On obtient donc une grande souplesse en terme d'architecture matérielle et logicielle, facilitant ainsi tout besoin éventuel futur de modification, d'adaptation ou d'évolution du serveur **100.**

Avantageusement, les modes de réalisations précédemment décrits permettent la gestion d'un ensemble ou un sous-ensemble de modules **1, 2, 3, 4, 5, 6, 7, 8** grâce à un partionnement de ces derniers, ainsi que de leurs signaux d'horloge **230, 330, 430, 530, 630, 730, 830** respectifs. La gestion d'un ensemble ou un sous-ensemble de modules **1, 2, 3, 4, 5, 6, 7, 8** est particulièrement avantageuse, car celle-ci permet le support d'OS différents selon les modules **1, 2, 3, 4, 5, 6, 7, 8,** l'identification, l'ordonnancement et la localisation précise de toute erreur éventuelle à des fins de diagnostic, ainsi qu'une reconfiguration dynamique éventuelle des partitions, notamment en cas de défaillance d'un module **1, 2, 3, 4, 5, 6, 7, 8.**

Un autre avantage des modes de réalisations proposés réside dans la réalisation matérielle du serveur **100,** et notamment, la manière dont le boitier d'interconnexion **30** et les modules **1, 2, 3, 4, 5, 6, 7, 8** sont interconnectés et alimentés électriquement, permet la maintenance à chaud de chaque élément du serveur **100** ainsi qu'une amélioration de sa résilience.

En outre, les modes de réalisations précédemment décrits pour un serveur **100** sont aussi transposables à tout équipement ou infrastructure informatique comprenant une pluralité de modules **1, 2, 3,** par exemple à un supercalculateur.

## Revendications

1. Serveur (100) comprenant une pluralité de modules (1-8), chaque module (1-8) comprenant:
- un élément de communication (16, 26) apte à assurer la cohérence d'une mémoire partagée entre les modules (1-8) ;
- une pluralité de processeurs CPU (10, 11, 20, 21) connectés entre eux et connectés à l'élément de communication (16, 26) ;
- un système sur une puce SOC (12, 22) connecté à la pluralité de processeurs CPU (10, 11, 20, 21) et à l'élément de communication (16, 26), le système sur une puce SOC (12, 22) exécutant un micrologiciel ;
- un réseau de portes programmables (FPGA) (13, 23, 33, 43, 53, 63, 73, 83) connecté au système sur une puce SOC (12, 22), à l'élément de communication (16, 26) et à la pluralité de processeurs CPU (10, 11, 20, 21) ;
les modules (1-8) étant interconnectés par :
- une interconnexion (27) entre chaque élément de communication (16, 26) via un réseau XQPI (eXtended QuickPath Interconnect) ;
- une interconnexion (28) entre chaque système sur une puce SOC (12, 22) via un réseau privé en protocole Ethernet, encapsulant un protocole de communication en accord avec la norme IPMB ;
le micrologiciel exécuté sur chaque système sur une puce SOC (12, 22) de chaque module (1-8) réalisant deux composants logiciels, à savoir :
- un composant contrôleur satellite de gestion du système (SMC) (15, 25) apte à mesurer les paramètres physiques de son module (1-8) et gérer les fonctions locales de ce module (1-8) ;
- un composant contrôleur de gestion de la carte de base (BMC) (14, 24, 34, 44, 54, 64, 74, 84) apte à superviser l'ensemble des SMC (15, 25) de tous les modules (1-8) notamment par la réception de mesures ou tout autres données remontées par lesdits SMC et par la transmission de message de commande à destination desdits SMC, gérer de manière centrale l'ensemble des fonctions du serveur (100) et échanger des données avec chacun des composants BMC (14, 24, 34, 44, 54, 64, 74, 84) via l'interconnexion (28) entre chaque système sur une puce SOC (12, 22),
chacun des modules (1-8) comprenant en outre un générateur de signal d'horloge (130, 230, 330, 430, 530, 630, 730, 830), apte à synchroniser les processeurs CPU (10, 11, 20, 21) de son module (1-8) ; et son FPGA (13, 23, 33, 43, 53, 63, 73, 83) étant programmé pour partitionner et grouper en sous-ensembles les modules (1-8) en fonction d'un même système d'exploitation supporté par lesdits modules ; et
ladite interconnexion (27) via un réseau XQPI étant configurée pour router ledit signal d'horloge entre différents modules (1-8) en fonction desdits sous-ensembles.

2. Serveur (100) selon la revendication 1, dans lequel l'interconnexion (27) des éléments de communication (16, 26) et l'interconnexion (28) des SOC (12, 22) sont réalisées via l'intermédiaire d'un boitier d'interconnexion (30), le boitier d'interconnexion (30) comprenant un réseau de portes programmables (FPGA).

3. Serveur (100) selon la revendication 2, dans lequel le boitier d'interconnexion (30) est alimenté électriquement par les modules (1-8), chaque module (1-8) comprenant au moins deux blocs d'alimentation PSU dimensionnés avec une redondance 2N.

4. Serveur (100) selon la revendication 2 ou 3, dans lequel une des fonctions gérées par chaque composant BMC (14, 24, 34, 44, 54, 64, 74, 84) est une fonction permettant l'instanciation des modules (1-8), pour cela :
- le FPGA (13, 23, 33, 43, 53, 63, 73, 83) de chaque module (1-8) étant configuré pour envoyer au boitier d'interconnexion (30) par l'intermédiaire du système sur une puce SOC (12, 22), une requête d'identifiant ID de chaque module (1-8) ;
- le FPGA du boitier d'interconnexion (30) étant configuré pour envoyer un identifiant ID unique au FPGA (13, 23, 33, 43, 53, 63, 73, 83) en réponse à la requête d'identifiant ;
- le composant BMC (14, 24, 34, 44, 54, 64, 74, 84) étant configuré pour déterminer l'adresse de son module (1-8) et des adresses des modules (1-8) auxquels il est interconnecté, la détermination de ces adresses étant réalisée en fonction de l'identifiant ID réceptionné par le FPGA (13, 23, 33, 43, 53, 63, 73, 83).

5. Serveur (100) selon la revendication 4, dans lequel l'identifiant ID envoyé par le FPGA du boitier d'interconnexion (30) est déterminé en fonction de chaque emplacement de connexion physique de chacun des modules (1-8) au module d'interconnexion (30).

6. Serveur (100) selon l'une des revendications précédentes, dans lequel chaque composant BMC (14, 24, 34, 44, 54, 64, 74, 84) est programmé pour :
- identifier dans un ensemble ou un sous-ensemble de modules (1-8) son appartenance à un module maître ou esclave, en fonction d'informations d'indentification de chacun des modules (1-8) de cet ensemble ou sous-ensemble ;
- si il appartient à un module maître, configurer son FPGA (13, 23, 33, 43, 53, 63, 73, 83), de manière que le FPGA (13, 23, 33, 43, 53, 63, 73, 83) distribue le signal d'horloge (130, 230, 330, 430, 530, 630, 730, 830) du module maître aux modules esclaves du même ensemble ou sous ensemble ;
- si il appartient à un module esclave, configurer son FPGA (13, 23, 33, 43, 53, 63, 73, 83) de manière que le FPGA (13, 23, 33, 43, 53, 63, 73, 83) désactive le signal d'horloge (130, 230, 330, 430, 530, 630, 730, 830) du module esclave.

7. Serveur (100) selon la revendication 6, dans lequel chaque processeur CPU (10, 11, 20, 21) de chaque module (1-8) comprend des compteurs d'horodatage TSC, aptes à synchroniser des tâches comportant une pluralité de processus légers, pour la synchronisation de l'ensemble des compteurs d'horodatages TSC de ces processeurs CPU (10, 11, 20, 21) dans un ensemble ou un sous-ensemble de module (1- 8):
- chaque composant BMC (14, 24, 34, 44, 54, 64, 74, 84) de chaque module esclave de cet ensemble ou sous-ensemble étant configuré pour envoyer une notification au BMC (14, 24, 34, 44, 54, 64, 74, 84) du module maître, lorsque le module esclave sort d'une phase d'initialisation ou de réinitialisation ;
- le BMC (14, 24, 34, 44, 54, 64, 74, 84) du module maître étant notifié lorsque le module maître sort d'une phase d'initialisation ou de réinitialisation ;
- le BMC (14, 24, 34, 44, 54, 64, 74, 84) du module maître étant configuré pour envoyer, lorsque tous les modules maître et esclaves sont sortis d'une phase d'initialisation ou de réinitialisation, un signal de synchronisation apte à réinitialiser l'ensemble des compteurs d'horodatage TSC des processeurs CPU (10, 11, 20, 21) pour tous les modules (1-8) du même ensemble ou sous-ensemble.

8. Serveur (100) selon la revendication 6 ou 7, dans lequel chaque FPGA (13, 23, 33, 43, 53, 63, 73, 83) de chaque module (1-8) comprend des compteurs d'horodatages TSC, aptes lors de toute occurrence d'erreur dans son module (1-8) à enregistrer des informations relatives à l'erreur comprenant au moins l'horodatage de l'erreur, pour la synchronisation de l'ensemble des compteurs d'horodatages TSC de chaque FPGA (13, 23, 33, 43, 53, 63, 73, 83) dans un ensemble ou un sous-ensemble de module (1-8) :
- chaque composant BMC (14, 24, 34, 44, 54, 64, 74, 84) de chaque module esclave de cet ensemble ou sous-ensemble étant configuré pour envoyer une notification au BMC (14, 24, 34, 44, 54, 64, 74, 84) du module maître, lorsque le module esclave sort d'une phase d'initialisation ou de réinitialisation ;
- le BMC (14, 24, 34, 44, 54, 64, 74, 84) du module maître étant notifié lorsque le module maître sort d'une phase d'initialisation ou de réinitialisation ;
- le BMC (14, 24, 34, 44, 54, 64, 74, 84) du module maître étant configuré pour envoyer, lorsque tous les modules maître et esclaves sont sortis d'une phase d'initialisation ou de réinitialisation, un signal de synchronisation apte à réinitialiser l'ensemble des compteurs d'horodatage TSC des FPGA (13, 23, 33, 43, 53, 63, 73, 83) pour tous les modules (1-8) du même ensemble ou sous-ensemble.

9. Serveur (100) selon la revendication 8, comprenant, pour l'identification d'une erreur dans un ensemble ou un sous-ensemble de modules (1-8) des moyens configurés pour réaliser une comparaison entre les informations d'erreurs enregistrées par l'ensemble des compteurs d'horodatage TSC des FPGA (13, 23, 33, 43, 53, 63, 73, 83) de cet ensemble ou sous-ensemble, les BMC (14, 24, 34, 44, 54, 64, 74, 84) étant aptes à échanger et partager les informations d'erreurs dans le même ensemble ou sous-ensemble de modules (1-8).

## Patentansprüche

1. Server (100), umfassend eine Vielzahl von Modulen (1-8), wobei jedes Modul (1-8) umfasst:
- ein Kommunikationselement (16, 26), das geeignet ist, die Kohärenz eines gemeinsamen Speichers zwischen den Modulen (1-8) sicherzustellen;
- eine Vielzahl von CPU-Prozessoren (10, 11, 20, 21), die miteinander gekuppelt und mit dem Kommunikationselement (16, 26) gekuppelt sind;
- ein System auf einem SOC-Chip (12, 22), der sich mit der Vielzahl von CPU-Prozessoren (10, 11, 20, 21) und mit dem Kommunikationselement (16, 26) kuppelt, wobei das System auf einem SOC-Chip (12, 22) eine Firmware ausführt;
- ein programmierbares Gate-Array (FPGA) (13, 23, 33, 43, 53, 63, 73, 83), das sich mit dem System auf einem SOC-Chip (12, 22), mit dem Kommunikationselement (16, 26) und mit der Vielzahl von CPU-Prozessoren (10, 11, 20, 21) kuppelt;
wobei die Module (1-8) miteinander verbunden sind durch:
- eine Verbindung (27) zwischen jedem Kommunikationselement (16, 26) über ein XQPI-Netzwerk (eXtended-QuickPath-Interconnect-Netzwerk);
- eine Verbindung (28) zwischen jedem System auf einem SOC-Chip (12, 22) über ein privates Netzwerk in dem Ethernet-Protokoll, das ein Kommunikationsprotokoll gemäß dem IPMB-Standard einkapselt;
wobei die auf jedem System auf einem SOC-Chip (12, 22) jedes Moduls (1-8) ausgeführte Firmware zwei Softwarekomponenten umsetzt, nämlich:
- eine Satellitensteuerkomponente für eine Systemverwaltung (SMC-Komponente) (15, 25), die geeignet ist, die physikalischen Parameter ihres Moduls (1-8) zu messen und die lokalen Funktionen dieses Moduls (1-8) zu verwalten;
- eine Baseboard-Management-Controller-Komponente (BMC-Komponente) (14, 24, 34, 44, 54, 64, 74, 84), die geeignet ist, die Gruppe der SMCs (15, 25) der sämtlichen Module (1-8) zu überwachen, insbesondere durch das Empfangen von Messungen oder anderen durch die SMCs zurückverfolgten Daten und durch das Übertragen einer Steuernachricht an die SMCs, zentrales Verwalten der ganzen Funktionen des Servers (100) und Austauschen von Daten mit jeder der BMC-Komponenten (14, 24, 34, 44, 54, 64, 74, 84) über die Verbindung (28) zwischen jedem System auf einem SOC-Chip (12, 22),
wobei jedes Modul (1-8) ferner einen Taktsignalgenerator (130, 230, 330, 430, 530, 630, 730, 830) umfasst, der geeignet ist, die CPU-Prozessoren (10, 11, 20, 21) seines Moduls (1-8) zu synchronisieren; und sein FPGA (13, 23, 33, 43, 53, 63, 73, 83) programmiert ist, um die Module (1-8) in Abhängigkeit von einem gleichen Betriebssystem, das durch die Module unterstützt wird, in Untergruppen aufzuteilen und zu gruppieren; und
wobei die Verbindung (27) über ein XQPI-Netzwerk konfiguriert ist, um das Taktsignal in Abhängigkeit von den Untergruppen zwischen verschiedenen Modulen (1-8) weiterzuleiten.

2. Server (100) nach Anspruch 1, wobei die Verbindung (27) der Kommunikationselemente (16, 26) und die Verbindung (28) der SOCs (12, 22) über ein Verbindungsgehäuse (30) erfolgt, wobei das Verbindungsgehäuse (30) ein programmierbares Gate-Array (FPGA) umfasst.

3. Server (100) nach Anspruch 2, wobei das Verbindungsgehäuse (30) durch die Module (1-8) elektrisch mit Strom versorgt wird, wobei jedes Modul (1-8) mindestens zwei PSU-Stromversorgungsteile umfasst, die mit einer 2N-Redundanz bemessen sind.

4. Server (100) nach Anspruch 2 oder 3, wobei eine der durch jede BMC-Komponente (14, 24, 34, 44, 54, 64, 74, 84) verwalteten Funktionen eine Funktion ist, die die Instanziierung der Module (1-8) für Folgendes ermöglicht:
- das FPGA (13, 23, 33, 43, 53, 63, 73, 83) jedes Moduls (1-8) ist konfiguriert, um mittels des Systems auf einem SOC-Chip (12, 22) an das Verbindungsgehäuse (30) eine Anfrage nach der ID-Kennung jedes Moduls (1-8) zu senden;
- das FPGA des Verbindungsgehäuses (30) ist konfiguriert, um als Reaktion auf die Kennungsanfrage eine eindeutige ID-Kennung an das FPGA (13, 23, 33, 43, 53, 63, 73, 83) zu senden;
- wobei die BMC-Komponente (14, 24, 34, 44, 54, 64, 74, 84) konfiguriert ist, um die Adresse ihres Moduls (1-8) und die Adressen der Module (1-8), mit denen sie verbunden ist, zu bestimmen, wobei die Bestimmung dieser Adressen in Abhängigkeit von der durch das FPGA empfangenen ID-Kennung (13, 23, 33, 43, 53, 63, 73, 83) erfolgt.

5. Server (100) nach Anspruch 4, wobei die durch das FPGA des Verbindungsgehäuses (30) an das Verbindungsmodul (30) gesendete ID-Kennung in Abhängigkeit von jedem physischen Verbindungsstandort jedes der Module (1-8) bestimmt wird.

6. Server (100) nach einem der vorstehenden Ansprüche, wobei jede BMC-Komponente (14, 24, 34, 44, 54, 64, 74, 84) programmiert ist zum:
- Identifizieren in einer Gruppe oder einer Untergruppe von Modulen (1-8) ihrer Zugehörigkeit zu einem Master- oder Slave-Modul in Abhängigkeit von den Identifikationsinformationen jedes der Module (1-8) dieser Gruppe oder Untergruppe;
- falls sie zu einem Master-Modul gehört, Konfigurieren ihres FPGA (13, 23, 33, 43, 53, 63, 73, 83), sodass das FPGA (13, 23, 33, 43, 53, 63, 73, 83) das Taktsignal (130, 230, 330, 430, 530, 630, 730, 830) des Master-Moduls an die Slave-Module der gleichen Gruppe oder Untergruppe verteilt;
- falls sie zu einem Slave-Modul gehört, Konfigurieren ihres FPGA (13, 23, 33, 43, 53, 63, 73, 83), sodass das FPGA (13, 23, 33, 43, 53, 63, 73, 83) das Taktsignal (130, 230, 330, 430, 530, 630, 730, 830) des Slave-Moduls deaktiviert.

7. Server (100) nach Anspruch 6, wobei jeder CPU-Prozessor (10, 11, 20, 21) jedes Moduls (1-8) TSC-Zeitstempelzähler umfasst, die geeignet sind, Aufgaben, die eine Vielzahl von leichten Prozesse aufweisen, für die Synchronisierung der Gruppe von TSC-Zeitstempelzählern dieser CPU-Prozessoren (10, 11, 20, 21) in einer Gruppe oder einer Untergruppe des Moduls (1-8) zu synchronisieren:
- jede BMC-Komponente (14, 24, 34, 44, 54, 64, 74, 84) jedes Slave-Moduls dieser Gruppe oder Untergruppe ist konfiguriert, um eine Benachrichtigung an den BMC (14, 24, 34, 44, 54, 64, 74, 84) des Master-Moduls zu senden, wenn das Slave-Modul eine Initialisierungs- oder Rückstellungsphase verlässt;
- der BMC (14, 24, 34, 44, 54, 64, 74, 84) des Master-Moduls wird benachrichtigt, wenn das Master-Modul eine Initialisierungs- oder Rückstellungsphase verlässt;
- der BMC (14, 24, 34, 44, 54, 64, 74, 84) des Master-Moduls ist konfiguriert, um, wenn sämtliche der Master- und Slave-Module eine Initialisierungs- oder Rückstellungsphase verlassen haben, eine Signalsynchronisation zu senden, die geeignet ist, um die Gruppe der TSC-Zeitstempelzähler der CPU-Prozessoren (10, 11, 20, 21) für sämtliche der Module (1-8) der gleichen Gruppe oder Untergruppe zurückzustellen.

8. Server (100) nach Anspruch 6 oder 7, wobei jedes FPGA (13, 23, 33, 43, 53, 63, 73, 83) jedes Moduls (1-8) TSC-Zeitstempelzähler umfasst, die geeignet sind, bei jedem Auftreten eines Fehlers in seinem Modul (1-8) Informationen bezüglich des Fehlers aufzuzeichnen, umfassend mindestens den Zeitstempel des Fehlers, für die Synchronisierung von der Gruppe von TSC-Zeitstempelzählern jedes FPGA (13, 23, 33, 43, 53, 63, 73, 83) in einer Gruppe oder einer Untergruppe des Moduls (1-8):
- jede BMC-Komponente (14, 24, 34, 44, 54, 64, 74, 84) jedes Slave-Moduls dieser Gruppe oder Untergruppe ist konfiguriert, um eine Benachrichtigung an den BMC (14, 24, 34, 44, 54, 64, 74, 84) des Master-Moduls zu senden, wenn das Slave-Modul eine Initialisierungs- oder Rückstellungsphase verlässt;
- der BMC (14, 24, 34, 44, 54, 64, 74, 84) des Master-Moduls wird benachrichtigt, wenn das Master-Modul eine Initialisierungs- oder Rückstellungsphase verlässt;
- der BMC (14, 24, 34, 44, 54, 64, 74, 84) des Master-Moduls ist konfiguriert, um, wenn sämtliche der Master- und Slave-Module eine Initialisierungs- oder Rückstellungsphase verlassen haben, ein Synchronisationssignal zu senden, das geeignet ist, die Gruppe der TSC-Zeitstempelzähler der FPGAs (13, 23, 33, 43, 53, 63, 73, 83) für sämtliche der Module (1-8) der gleichen Gruppe oder einer Untergruppe zurückzustellen.

9. Server (100) nach Anspruch 8, umfassend, für die Identifizierung eines Fehlers in einer Gruppe oder einer Untergruppe von Modulen (1-8), Mittel, die konfiguriert sind, um einen Vergleich zwischen den durch die Gruppe von TSC-Zeitstempelzählern der FPGAs (13, 23, 33, 43, 53, 63, 73, 83) dieser Gruppe oder Untergruppe aufgezeichneten Fehlerinformationen durchzuführen, wobei die BMCs (14, 24, 34, 44, 54, 64, 74, 84) geeignet sind, um die Fehlerinformationen in der gleichen Gruppe oder Untergruppe von Modulen (1-8) auszutauschen und zu teilen.

## Claims

1. A server (100) comprising a plurality of modules (1-8), each module (1-8) comprising:
- a communication element (16, 26) capable of ensuring the consistency of a memory shared between modules (1-8);
- a plurality of CPU processors (10, 11, 20, 21) connected to each other and to the communication element (16, 26);
- a system-on-a-chip SOC (12, 22) connected to the plurality of CPU processors (10, 11, 20, 21) and to the communication element (16, 26), the system-on-a-chip SOC (12, 22) running firmware;
- a field-programmable gate array (FPGA) (13, 23, 33, 43, 53, 63, 73, 83) connects to the system-on-a-chip SOC (12, 22), the communication element (16, 26) and the plurality of CPU processors (10, 11, 20, 21);
the modules (1-8) being interconnected by:
- an interconnection (27) between each communication element (16, 26) via an XQPI (extended QuickPath Interconnect) network;
- an interconnection (28) between each system-on-a-chip SOC (12, 22) via a private Ethernet protocol network, encapsulating a communication protocol in accordance with the IPMB standard;
the firmware running on each system-on-a-chip SOC (12, 22) of each module (1-8) implementing two software components, namely:
- a satellite management controller (SMC) component (15, 25) of the system, capable of measuring the physical parameters of its module (1-8) and managing the local functions of this module (1-8);
- a baseboard management controller (BMC) component (14, 24, 34, 44, 54, 64, 74, 84) capable of supervising all the SMCs (15, 25) of all the modules (1-8), in particular by receiving measurements or any other data sent back by said SMCs and by transmitting control messages to said SMCs, centrally managing all the functions of the server (100), and exchanging data with each of the BMC components (14, 24, 34, 44, 54, 64, 74, 84) via the interconnection (28) between each system-on-a-chip SOC (12, 22),
each of the modules (1-8) further comprising a clock signal generator (130, 230, 330, 430, 530, 630, 730, 830), adapted to synchronize the CPU processors (10, 11, 20, 21) of its module (1-8); and its FPGA (13, 23, 33, 43, 53, 63, 73, 83) being programmed to partition and group into subsets the modules (1-8) according to a same operating system supported by said modules; and
said interconnection (27) via an XQPI network being configured to route said clock signal between different modules (1-8) depending on said subsets.

2. The server (100) according to claim 1, wherein the interconnection (27) of the communication elements (16, 26) and the interconnection (28) of the SOCs (12, 22) are made via an interconnection box (30), the interconnection box (30) comprising a field programmable gate array (FPGA).

3. The server (100) according to claim 2, wherein the interconnection box (30) is supplied by the modules (1-8), each module (1-8) comprising at least two power supply units PSUs sized with 2N redundancy.

4. The server (100) according to claim 2 or 3, wherein one of the functions managed by each BMC component (14, 24, 34, 44, 54, 64, 74, 84) is a function enabling the instantiation of modules (1-8), for which purpose:
- the FPGA (13, 23, 33, 43, 53, 63, 73, 83) of each module (1-8) being configured to send an ID request for each module (1-8) to the interconnection box (30) via the system-on-a-chip SOC (12, 22);
- the FPGA of the interconnect box (30) being configured to send a unique identifier ID to the FPGA (13, 23, 33, 43, 53, 63, 73, 83) in response to the ID request;
- the BMC component (14, 24, 34, 44, 54, 64, 74, 84) being configured to determine the address of its module (1-8) and the addresses of the modules (1-8) to which it is interconnected, these addresses being determined as a function of the identifier ID received by the FPGA (13, 23, 33, 43, 53, 63, 73, 83).

5. The server (100) according to claim 4, wherein the identifier ID sent by the FPGA of the interconnection box (30) is determined as a function of each physical connection location of each of the modules (1-8) to the interconnection module (30).

6. The server (100) according to any of the preceding claims, wherein each BMC component (14, 24, 34, 44, 54, 64, 74, 84) is programmed to:
- identify, in a set or subset of modules (1-8), whether it belongs to a master or slave module, based on identification information for each of the modules (1-8) in that set or subset;
- if it belongs to a master module, configure its FPGA (13, 23, 33, 43, 53, 63, 73, 83) so that the FPGA (13, 23, 33, 43, 53, 63, 73, 83) distributes the clock signal (130, 230, 330, 430, 530, 630, 730, 830) from the master module to the slave modules in the same set or subset;
- if it belongs to a slave module, configure its FPGA (13, 23, 33, 43, 53, 63, 73, 83) so that the FPGA (13, 23, 33, 43, 53, 63, 73, 83) disables the clock signal (130, 230, 330, 430, 530, 630, 730, 830) of the slave module.

7. The server (100) according to claim 6, wherein each CPU processor (10, 11, 20, 21) of each module (1-8) comprises timestamp counters TSC, suitable for synchronizing tasks comprising a plurality of light processes, for synchronizing all the timestamp counters TSC of these CPU processors (10, 11, 20, 21) in a module (1-8) set or subset:
- each BMC component (14, 24, 34, 44, 54, 64, 74, 84) of each slave module of that set or subset being configured to send a notification to the BMC (14, 24, 34, 44, 54, 64, 74, 84) of the master module, when the slave module exits an initialization or reset phase;
- The BMC (14, 24, 34, 44, 54, 64, 74, 84) of the master module is notified when the master module exits an initialization or reset phase;
- The BMC (14, 24, 34, 44, 54, 64, 74, 84) of the master module being configured to send, when all the master and slave modules have exited an initialization or reset phase, a synchronization signal capable of resetting all the timestamp counters TSC of the CPU processors (10, 11, 20, 21) for all the modules (1-8) in the same set or subset.

8. The server (100) according to claim 6 or 7, wherein each FPGA (13, 23, 33, 43, 53, 63, 73, 83) of each module (1-8) comprises timestamp counters TSC, capable on any occurrence of an error in its module (1-8) of recording information relating to the error comprising at least the timestamp of the error, for the synchronization of the set of timestamp counters TSC of each FPGA (13, 23, 33, 43, 53, 63, 73, 83) in a module (1-8) set or subset:
- each BMC component (14, 24, 34, 44, 54, 64, 74, 84) of each slave module of that set or subset being configured to send a notification to the BMC (14, 24, 34, 44, 54, 64, 74, 84) of the master module, when the slave module exits an initialization or reset phase;
- The BMC (14, 24, 34, 44, 54, 64, 74, 84) of the master module is notified when the master module exits an initialization or reset phase;
- The BMC (14, 24, 34, 44, 54, 64, 74, 84) of the master module being configured to send, when all the master and slave modules have exited an initialization or reset phase, a synchronization signal capable of resetting all the timestamp counters TSC of the FPGAs (13, 23, 33, 43, 53, 63, 73, 83) for all the modules (1-8) in the same set or subset.

9. The server (100) according to claim 8, comprising, for identifying an error in a set or subset of modules (1-8), means configured to perform a comparison between the error information recorded by the set of timestamp counters TSC of the FPGAs (13, 23, 33, 43, 53, 63, 73, 83) of that set or sub-set, the BMCs (14, 24, 34, 44, 54, 64, 74, 84) being able to exchange and share error information within the same set or sub-set of modules (1-8).
